(19) **Europäisches Patentamt**
**European Patent Office**
**Office européen des brevets**

(11) **EP 3 242 127 B1**

(12) **EUROPEAN PATENT SPECIFICATION**

(45) Date of publication and mention
of the grant of the patent:
**28.11.2018 Bulletin 2018/48**

(51) Int Cl.:
***G01N 23/20*** *(2018.01)*    *G01N 23/046* *(2018.01)*
*G01N 23/20091* *(2018.01)*

(21) Application number: **17154154.3**

(22) Date of filing: **01.02.2017**

(54) **METHOD AND SYSTEM FOR LIQUID DETECTION**

VERFAHREN UND SYSTEM ZUR FLÜSSIGKEITSDETEKTION

PROCÉDÉ ET SYSTÈME DE DÉTECTION DE LIQUIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.05.2016 CN 201610294907**

(43) Date of publication of application:
**08.11.2017 Bulletin 2017/45**

(73) Proprietor: **Nuctech Company Limited
TongFang Building,
Shuangqinglu,
Haidian District
Beijing 100084 (CN)**

(72) Inventors:
 • **CHEN, Zhiqiang**
   **Haidian District, Beijing 100084 (CN)**
 • **ZHANG, Li**
   **Haidian District, Beijing 100084 (CN)**
 • **YANG DAI, Tianyi**
   **Haidian District, Beijing 100084 (CN)**
 • **XING, Yuxiang**
   **Haidian District, Beijing 100084 (CN)**
 • **LI, Liang**
   **Haidian District, Beijing 100084 (CN)**

 • **HUANG, Qingping**
   **Haidian District, Beijing 100084 (CN)**
 • **SUN, Yunda**
   **Haidian District, Beijing 100084 (CN)**
 • **JIN, Xin**
   **Haidian District, Beijing 100084 (CN)**
 • **CHANG, Ming**
   **Haidian District, Beijing 100084 (CN)**
 • **SHEN, Le**
   **Haidian District, Beijing 100084 (CN)**

(74) Representative: **Boult Wade Tennant LLP
Verulam Gardens
70 Gray's Inn Road
London WC1X 8BT (GB)**

(56) References cited:
**EP-A1- 2 075 570**     **FR-A1- 3 023 001**
**US-B2- 7 519 154**

 • **ZHANG LI ET AL: "Determination of liquid's
molecular interference function based on X-ray
diffraction and dual-energy CT in security
screening", APPLIED RADIATION AND
ISOTOPES, ELSEVIER, OXFORD, GB, vol. 114, 14
May 2016 (2016-05-14), pages 179-187,
XP029596192, ISSN: 0969-8043, DOI:
10.1016/J.APRADISO.2016.05.019**

**Description**

**TECHNICAL FIELD**

The invention relates to a method and system for liquid detection.

**BACKGROUND**

In existing radiation imaging techniques, a main way to implement nondestructive detection is diffraction imaging, which implements detection of a liquid substance without sampling based on a principle that substances with different molecular structures will produce different X-Ray Diffraction (XRD) patterns.

**SUMMARY**

The invention provides a method and system for liquid detection.

The method for liquid detection according to a first aspect of the invention is defined in claim 1.

The system for liquid detection according to a second aspect of the invention is defined in claim 8.

The method and system for liquid detection according to embodiments of the invention may obtain the molecular interference function with a higher signal-to-noise ratio and a larger effective range of the liquid substance and thus identify a wider range of liquid substances.

**BRIEF DESCRIPTION OF THE DRAWINGS**

The invention may be better understood from the following description of implementations of the invention in conjunction with accompanying drawings, wherein:

Fig. 1 illustrates a flow diagram of a method for liquid detection according to an embodiment of the invention;

Fig. 2 illustrates a flow diagram of the processing of extracting a MIF of a liquid substance according to an embodiment of the invention;

Fig. 3a and Fig. 3b illustrate $F_{AB}^{2}$, $S_{AB}$ and $F_{IAM}^{2}$, $S_{IAM}$ of water and ethanol, respectively;

FIG. 4a and Fig. 4b illustrate MIF calculation results, which are obtained by employing an exact solution and an approximate solution, of water and ethanol, respectively.

**DETAILED DESCRIPTION**

Features and exemplary embodiments of various aspects of the invention will be described in detail below. In the following detailed description, numerous specific details are provided so as to provide thorough understanding of the invention. However, it is apparent for those skilled in the art that the invention may be practiced without some of the specific details. The following description of the embodiments is merely provided for the purpose of providing better understanding of the invention by illustrating examples of the invention. The invention is not limited to any of the following specific configurations and algorithms and covers any modification, substitution and improvement of elements, components and algorithms without departing from the scope of the invention, as defined by the claims. In the accompanying drawings and the following description, well-known structures and techniques are not illustrated so as to avoid unnecessarily obscuring the invention.

Liquid identification by means of XRD is implemented based on a Molecular Interference Function (MIF) of a liquid, as some substance information for liquid identification may be extracted from the MIF. French invention patent application FR3023001A1 provides a method for extracting the MIF of an object, including: irradiating an object with incident X-ray photon radiation; acquiring a measured transmission spectrum of energy transmitted by the object; acquiring a measured scattering energy spectrum scattered by the object; determining a characteristic (for example, MIF) of the object from either the measured scattering spectrum, or both the measured scattering spectrum and the measured transmission spectrum. European invention patent application EP2075570A1 provides a method for extracting the MIF of an unknown substance, including: determining a relative molecular interference function of the unknown substance from the ratio between a diffraction profile of the unknown substance and a diffraction profile of a calibration substance; and multiplying the relative molecular interference function of the unknown substance with a molecular interference function of the calibration substance to get the molecular interference function of the calibration substance.

However, when extracting the MIF of an unknown liquid substance, it is general to obtain a coherent scattering formation factor $F^2$ and an incoherent scattering function S of the liquid substance firstly. US invention patent application US7519154 B2 provides a method for extracting the MIF, including: obtaining an equivalent atomic number of the liquid substance by using XRD energy spectrum data in a high energy range of the liquid substance by means of a ratio method and a statistical law; obtaining estimations of $F^2$ and S of the liquid substance based on an empirical formula or from a lookup table; and iteratively solving and optimizing the MIF of the liquid substance based on a fact that the MIF fluctuates around 1, wherein the method is referred to as a High Energy Tip Region Analysis (HETRA) based method. US invention patent application US8582718 B2 provides a method for extracting the MIF, including: linearly fitting a certain section of the XRD energy spectrum data of the liquid substance to obtain linear approximations of $F^2$ and S of the liquid substance; and extracting the MIF of the liquid substance, wherein the method is referred to as a linear-approximation based method. The above two methods approximately calculate the MIF of the liquid substance by using information contained in the XRD energy spectrum data of the liquid substance and thus obtain a good result within a certain range.

For liquid security check, it is critical for identifying the liquid substance to extract the MIF of the liquid substance. Although the existing methods for extracting the MIF may obtain accurate MIF calculation results, there still exist some problems.

The critical point of the HETRA based method is to extract the equivalent atomic number of the liquid substance from the XRD energy spectrum data of the liquid substance, wherein the equivalent atomic number extracted from the XRD energy spectrum data is different from the equivalent atomic number extracted from CT data. A method for extracting the equivalent atomic number of the liquid substance from the XRD energy spectrum data of the liquid substance relies on the XRD energy spectrum data in a high range of a scattering vector, wherein the scattering vector is defined as

$$q = \frac{E \sin(\theta/2)}{hc},$$ $E$ is a photon energy, $\theta$ is a scattering angle, hc is a product of Planck constant and light speed. The high range, for example, $3nm^{-1} \sim 4nm^{-1}$ of the scattering vector corresponds to high energy tip data in the XRD energy spectrum data of energy dispersion. It should be noted that the XRD energy spectrum data is obtained by XRD scanning of the energy dispersion; as the scattering angle $\theta$ is fixed, the XRD energy spectrum data may be transformed to XRD spectrum data that takes the scattering vector $q$ as its horizontal coordinate; there is a linear relationship between the photon energy E and the scattering vector $q$, so the term of "energy spectrum data" is used throughout the whole description.

Generally, signals in the high range of the scattering vector are weak and a signal-to-noise ratio in the high range of the scattering vector is low and difficult to obtain, so a deviation of the extracted equivalent atomic number is large and the accuracy of the extracted MIF is reduced. For a system in which the scattering angle is small and the energy of a X-ray source is limited, the HETRA based method is not applicable. Furthermore, according to relevant documents describing the HETRA based method, the HETRA based method is applicable to obtain the equivalent atomic number within a certain range of the liquid substance. For example, for substances such as organics, water and hydrogen peroxide whose equivalent atomic number is less than 11, the HETRA based method has a good performance; for substances whose equivalent atomic number is larger, as the accuracy of the equivalent atomic number estimated by means of the ratio method and the statistics law cannot be ensured, the types of liquid substance to which the HETRA based method is applicable are somewhat limited.

The linear-approximation based method is different from the HETRA based method in that the XRD energy spectrum data in a middle range, in which the signal-to-noise ratio is high, rather than the high range of the scattering vector is analyzed, so the linear-approximation based method is less interfered by noises. However, the linear-approximation based method estimates $F^2$ and S using a straight line, the approximate range of which is small, i.e. the linearity of $F^2 + S$ is good only in a range less than $2.5nm^{-1}$ of the scattering vector, so only the MIF in a limited range may be obtained by the linear-approximation based method.

Therefore, the existing methods for extracting the MIF cannot obtain good MIF calculation results with respect to the XRD energy spectrum data under various cases.

The invention proposes a novel method and system for liquid detection, which processes the XRD energy spectrum data of the liquid substance in combination with the CT data of the liquid substance and thus extracts the MIF of the liquid substance. Firstly, the equivalent atomic number of the liquid substance may be obtained by CT scanning such as dual-energy CT scanning, spectrum CT scanning, or phase contrast CT scanning. Secondly, based on the equivalent atomic number of the liquid substance, the equivalent molecular formula of the liquid substance is obtained by combining two or more elements, and then approximate functions of $F^2$ and S of the liquid substance may be obtained by means of Independent Atomic Modeling (IAM). Finally, the MIF of the liquid substance is extracted by the above approximation functions of $F^2$ and S.

In the method and system for liquid detection according to embodiments of the invention, the accuracy of the estimated $F^2$ and S of the liquid substance is effectively improved, and the MIF with a higher signal-to-noise ratio and a larger effective range may be obtained.

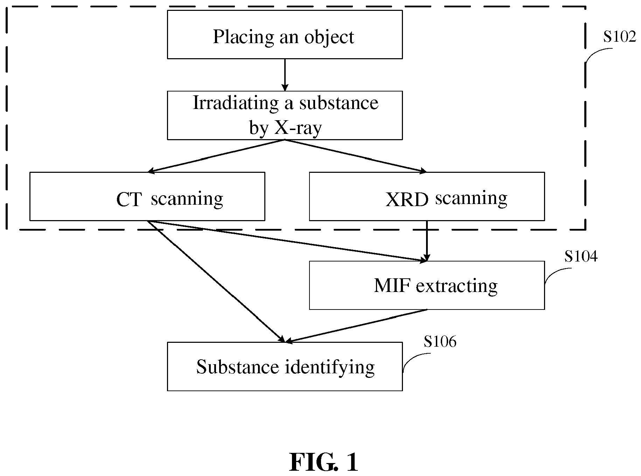

The method and system for liquid detection according to embodiments of the invention will be described in detail below. Fig. 1 illustrates a flow diagram of a method for liquid detection according to an embodiment of the invention. As shown in Fig. 1, the method for liquid detection includes: S102, performing CT scanning and XRD scanning on the liquid substance within an detection area simultaneously to obtain the CT data and the XRD energy spectrum data of the liquid substance, wherein the CT data of the liquid substance is obtained by CT scanning, the CT data includes the equivalent atomic number of the liquid substance, the XRD scattering energy spectrum data and transmission energy spectrum data of the liquid substance are obtained by XRD scanning, and the XRD energy spectrum data of the liquid substance is obtained as a result of correcting the XRD scattering energy spectrum data by using the XRD transmission energy spectrum data; S104, extracting the MIF of the liquid substance by integrating the CT data and the XRD energy spectrum data of the liquid substance; and S106, identifying the liquid substance by using the MIF and the CT data of the liquid substance.

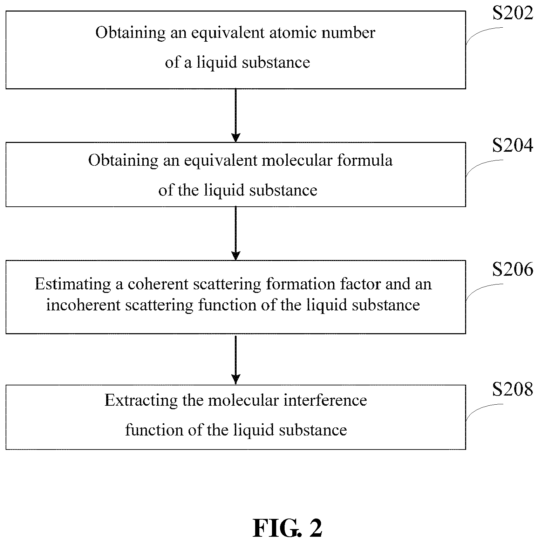

Fig. 2 illustrates a flow diagram of the processing of extracting a MIF of a liquid substance. As shown in Fig. 2, the processing of extracting the MIF includes: S202, obtaining the equivalent atomic number of the liquid substance by using the CT data of the liquid substance; S204, performing two-element or multi-element decomposition of the liquid substance by using the equivalent atomic number of the liquid substance to obtain the equivalent molecular formula, for example, $A_m B_n$, of the liquid substance; S206, estimating $F^2$ and S of the liquid substance based on the equivalent molecular formula of the liquid substance; and S208, extracting the MIF of the liquid substance by using $F^2$ and S of the liquid substance.

Specific processes of implementing the steps S202-S208 are described in detail below.

**S202, the equivalent atomic number of the liquid substance is obtained.**

The equivalent atomic number of the liquid substance is obtained by reconstructing the CT data of the liquid substance. For example, in the case that the CT data of the liquid substance is obtained by dual-energy CT scanning, the equivalent atomic number of the liquid substance may be defined as follows:

$$Z_{eff} = \left( \sum_i N_i Z_i^{4.5} / \sum_i N_i Z_i \right)^{1/3.5} \quad (1)$$

wherein $N_i$ is a number of atoms of each element in a real molecular formula of the liquid substance, $Z_i$ is the atomic number of a corresponding element in the real molecular formula of the liquid substance, and $Z_{eff}$ is the equivalent atomic number of the liquid substance.

Those skilled in the art will appreciate that although definition formulas of the equivalent atomic number that are reconstructed by the CT data obtained by energy-spectrum CT scanning and phase contrast CT scanning of the liquid substance are slightly different from equation (1), these definition formulas of the equivalent atomic number also provide calculation relations between the equivalent molecular formula and the equivalent atomic number.

**S204, the equivalent molecular formula of the liquid substance is obtained.**

The equivalent molecular formula of the liquid substance is obtained by performing two-element or multi-element decomposition of the liquid substance using the equivalent atomic number of the liquid substance. Here, assuming that the liquid substance is composed of two elements of A and B (or composed of multiple elements), and its equivalent molecular formula is $A_m B_n$, wherein m+n=1 and both m and n are positive rational numbers. As most detection objects contain hydrogen (H) in liquid security check, it is assumed that the element B is H. Of course, it may also be assumed that the liquid substance further contains other known elements.

The equivalent molecular formula $A_m B_n$, for example, $A_m H_n$ may be solved by the following equation set:

$$\left( \left( m Z_A^{4.5} + n \right) / \left( m Z_A + n \right) \right)^{1/3.5} = Z_{eff} \quad (2)$$

$$m + n = 1 \quad (3)$$

$$Z_A = \left\lceil Z_{eff} \right\rceil \quad (4)$$

wherein equation (2) ensures that the liquid substance represented by the equivalent molecular formula has a same equivalent atomic number as a real substance in dual energy decomposition, wherein $m$ and $n$ represent a number ratio of the elements A and B in the liquid substance. Equation (4) represents ceil of $Z_{eff}$ and it is an approach to solve the element A. Of course, other approaches may also be used as long as the above equation set may be solved. The equivalent molecular formula of the liquid substance may be obtained by the equations (2)-(4).

S206, $F^2$ and S of the liquid substance are estimated.

In the case that a molecular formula of the liquid substance is known, it is common to estimate $F^2$ and S of the liquid substance by means of Independent Atomic Modeling (IAM), which may estimates $F^2$ and S of the liquid substance more accurately according to a superposition principle.

$$F_{IAM}^2 = \sum N_i F_i^2 \qquad (5)$$

$$S_{IAM} = \sum N_i S_i \qquad (6)$$

wherein $N_i$ represents the number of atoms of the $i^{th}$ element in the equivalent molecular formula of the liquid substance, and $F_i^2$ and $S_i$ represent the coherent scattering formation factor and the incoherent scattering function of the $i^{th}$ element respectively.

It is difficult to obtain accurate $F^2$ and S of the liquid substance, so it is common to replace real values of $F^2$ and S with $F_{IAM}^2$ and $S_{IAM}$, which are obtained by means of IAM. This approximation has a good performance in X-ray diffraction. Based on the above obtained equivalent molecular formula $A_m B_n$, $F^2$ and S of the liquid substance are estimated based on the following equations by means of IAM:

$$F_{AB}^2 = mF_A^2 + nF_B^2 \qquad (7)$$

$$S_{AB} = mS_A + nS_B \qquad (8)$$

wherein $F_A^2$, $F_B^2$, $S_A$ and $S_B$ may be obtained by table lookups.

Premises for approximating $F^2$ and S by using $F_{AB}^2$ and $S_{AB}$ are the following: a. most liquid objects in security check contain hydrogen; b. most liquids are composed of elements having a low atomic number; c. shape similarities of $F^2$ and S of the elements having the low atomic number are high; d. the shape similarities of $F^2$ and S of the elements having similar atomic numbers are high. It is assumed that the reliability of the above premises "a" and "b" may be verified by statistics and the above premises "c" and "d" may be verified by table look-up.

Although $F_{AB}^2$ and $S_{AB}$ have similar shapes, i.e., similar variation tendencies with $F_{IAM}^2$ and $S_{IAM}$ or real $F^2$ and S of the liquid substance, the values of $F_{AB}^2$ and $S_{AB}$ are multiples of those of $F_{IAM}^2$ and $S_{IAM}$ or real $F^2$ and S, wherein the multiples are related to the liquid substance. The largest value of $F^2$ of a single atom is a square of the atomic number thereof, which is obtained at q=0; the largest value of S of a single atom is the atomic number thereof, which is obtained upon q increasing to infinity or an adequate large value. Therefore, as can be seen from the equations (5)-(8), the largest values of $F_{IAM}^2$ and $S_{IAM}$ are $\sum N_i Z_i^2$ and $\sum N_i Z_i$ respectively; and the largest values of $F_{AB}^2$ and $S_{AB}$ are $mZ_A^2 + nZ_B^2$ and $mZ_A + nZ_B$, respectively.

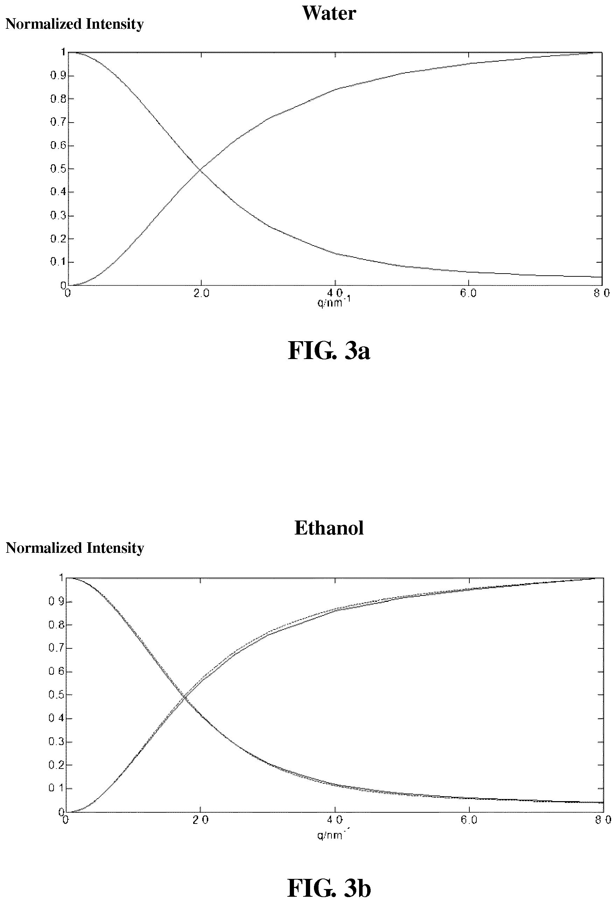

Fig. 3a illustrates $F_{AB}^2$, $S_{AB}$ and $F_{IAM}^2$, $S_{IAM}$ of water; Fig. 3b illustrates $F_{AB}^2$, $S_{AB}$ and $F_{IAM}^2$, $S_{IAM}$ of ethanol, wherein their largest intensities are normalized. In Figs. 3a-3b, solid lines represent $F_{IAM}^2$ and $S_{IAM}$, and dotted lines represent $F_{AB}^2$ and $S_{AB}$. As the composition of a water molecular is consistent with the two-element assumption, the shapes of the estimation results completely overlap those of the results calculated by means of IAM in the case that the molecular is known. An ethanol molecular contains three elements, and the estimated function curves are substantially consistent with the calculation results by means of IAM in shape. Comparison scopes of all functions are (0 nm$^{-1}$~8 nm$^{-1}$), which is larger than a scope to be considered for actual liquid detection.

S208, the MIF of the liquid substance is extracted by using $F^2$ and S of the liquid substance.

In consideration of different XRD measurement conditions, an exact solution and an approximate solution are provided herein.

After the XRD scattering energy spectrum data of the liquid substance is obtained by means of energy dispersion in which the energy spectrum of photons scattered at a fixed angle is measured by using a polychromatic X-ray source and an energy resolving detector, the XRD energy spectrum data of the liquid substance may be obtained by correcting the XRD scattering energy spectrum data of the liquid substance using the XRD transmission energy spectrum data of the liquid substance, wherein the XRD energy spectrum data of the liquid substance may be transformed to the scattering vector "q" according to the following equation:

$$q = \frac{E \sin(\theta/2)}{hc} \qquad (9)$$

wherein $\theta$ is the scattering angle for obtaining the XRD energy spectrum data, $h$ is the Planck constant, and $C$ is the light speed.

1) The exact solution

The XRD energy spectrum intensity formula of the liquid substance may be represented as follows:

$$I_{XRD} = \alpha\left[F^2 M + S\right] \approx \alpha\left[F_{IAM}^2 M + S_{IAM}\right] \qquad (10)$$

wherein the coefficient $\alpha$ includes a geometric parameter of the system, a solid angle for detection, a molecular density of substance and so on, and may be considered as a constant for a specific substance, and $M$ is the MIF. With the extraction of the above equivalent molecular formula, $M$ may be calculated by the following equation:

$$I_{XRD} = bF_{AB}^2 M + cS_{AB} \qquad (11)$$

i.e.:

$$M = \left(I_{XRD} - cS_{AB}\right) / \left(bF_{AB}^2\right) \qquad (12)$$

wherein $b$ and $c$ are two different parameters as $F_{AB}^2$, $S_{AB}$ are different multiples of $F_{IAM}^2$, $S_{IAM}$, respectively.

As the MIF of the liquid substance fluctuates around 1 and the fluctuation of the MIF gradually decreases as q increases, the coefficients of $b$ and $c$ may be solved by minimization of the following expression:

$$\underset{b,c}{\arg\min}\left\{\int_{q_1}^{q_2}\left[M(q)-1\right]^2 dq\right\} \qquad (13)$$

wherein an upper limit $q_2$ and a lower limit $q_1$ may be selected according to an effective range, for example, (3.0 nm$^{-1}$~4.0 nm$^{-1}$) of the actually measured XRD energy spectrum data or other priori knowledge. According to the fluctuation of the MIF of the liquid substance, the larger the range value is, i.e. if it is in the high range of the scattering vector $q$, the more accurate the optimized result is.

That is to say, the upper limit and the lower limit of the scattering vector $q$ of the liquid substance may be selected based on the effective range of the XRD energy spectrum data of the liquid substance; and the molecular interference function of the liquid substance is extracted based on the XRD energy spectrum intensity formula by using the upper limit and the lower limit of the scattering vector q.

The exact solution is similar to the HETRA based method in that after the estimations of $F^2$ and S of the liquid substance are obtained, the MIF of the liquid substance is solved and optimized in the high range of the scattering vector $q$. The exact solution differs from the HETRA based method in that $F^2$ and S of the liquid substance are estimated based on the equivalent atomic number, which is obtained by using the CT data, of the liquid substance. As the calculation error of the equivalent atomic number obtained by using the CT data may be within 5% or 3% and may not be influenced by noises in the high range of the XRD energy spectrum data, the estimation accuracy of $F^2$ and S may be improved.

Meanwhile, the equivalent atomic number represented by the equation (1) is applicable to various substances. The method of solving the equivalent molecular formula by means of multi-element decomposition is more suitable for the liquid substance, and may obtain a good estimation result for substances whose equivalent atomic number is larger than 11. Furthermore, the exact solution solves the MIF by using the equations (11) and (12), and the MIF solved by the exact solution is more consistent with physical essence as compared with the MIF solved by using the total scattering cross section $F^2 + S$, wherein the latter method deems that the diffraction intensity is proportional to $(F^2 + S)M$.

2) The approximate solution

The MIF of the liquid substance may be solved based on the following approximate equation of the diffraction intensity formula by using the total scattering cross section $F^2 + S$:

$$I_{XRD} \approx \beta \left( F^2 + S \right) M \approx K \left( F_{AB}^2 + S_{AB} \right) M \qquad (14)$$

i.e.:

$$M \approx I_{XRD} / \left( K \left( F_{AB}^2 + S_{AB} \right) \right) \qquad (15)$$

Constant K may be calculated by using expression (16).

$$\arg \min_{K} \left\{ \int_{q_1}^{q_2} \left[ M - 1 \right]^2 dq \right\} \qquad (16)$$

The expression (16) is similar with the expression (13), both of which need to be optimized in the high range $(q_1, q_2)$ of the scattering vector.

When the actually measured XRD energy spectrum data does not include the data in such a high range of the scattering vector or the noises included in the high range of the scattering vector are too high to be used, the approximate solution may obtain the approximation result of the MIF according to equation (17):

$$M' = I_{XRD} / \left( F_{AB}^2 + S_{AB} \right) \qquad (17)$$

$M'$ has a similar shape with the real MIF of the liquid substance, and is a constant multiple of the real MIF. Generally, when identifying the liquid substance by using the MIF, the people is concerned about the shape of the MIF, for example, locations of peaks and peak widths and so on of the shape of the MIF, so $M'$ may also satisfy requirements of liquid identification.

The approximate solution is not limited by the measurement scope of the XRD energy spectrum data, and may also obtain a good result when the exact solution cannot be used. The calculation result of the approximate solution is close to that of the exact solution in the low range of the scattering vector q and is slightly different from that of the exact solution in the high range of the scattering vector q. The application scope of the approximate solution is larger than that of the exact solution, so it has a good practicability.

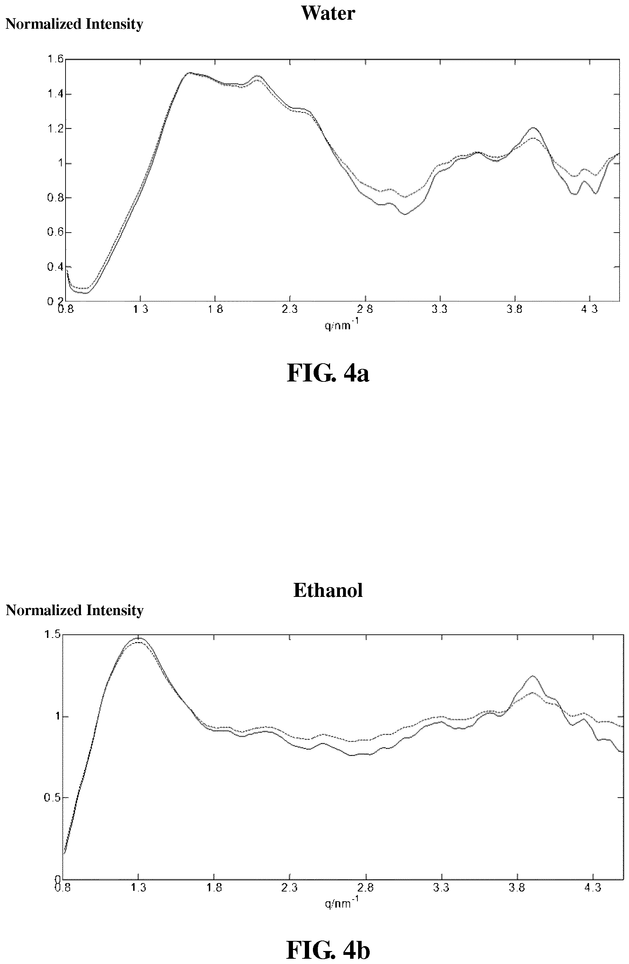

Fig. 4a illustrates MIF calculation results of water obtained by the above two solutions, and Fig. 4b illustrates MIF calculation results of ethanol obtained by the above two solutions. The curve obtained by the approximate solution is consistent with the result obtained by the exact solution at $1.61 nm^{-1}$, i.e. their intensities are equal, so that curve shapes obtained by the two solutions may be conveniently compared with each other. In Figs. 4a-4b, the solid lines represent the MIF calculation results of the exact solution, and the dotted lines represent the MIF calculation results of the approximate solution.

The method for liquid detection according to embodiments of the invention utilizes the CT data and the XRD energy spectrum data in a rational way, makes a rational assumption of elements of the liquid, and obtains the equivalent molecular formula of the liquid substance via multi-element combination, so that the coherent scattering formation factor and the incoherent scattering function of the liquid substance may be estimated more accurately and then the MIF of the liquid substance may be obtained. The method for liquid detection according to embodiments of the invention avoids using the XRD energy spectrum data whose signal-to-noise radio is low to estimate the MIF and may obtain a good result in the case that the deviation of the equivalent atomic number calculated by using the CT data is less than 5%. Furthermore, the method for liquid detection according to embodiments of the invention has low noise sensitivity and a broad application scope, and may use the XRD energy spectrum data measured under different conditions and obtain a more accurate molecular interference function with a wider scope.

Those skilled in the art should appreciate that the above described processing S102 may be implemented by a X-ray source and an energy resolving detector, which constitute a data obtaining device, and the above described processing S104-S106 may be implemented by corresponding function modules, for example, a function obtaining unit and a substance identifying unit, wherein the X-ray source, the energy resolving detector and the function modules may constitute the system for liquid detection for implementing the method for liquid detection according to embodiments of the invention. Here, the function modules may be implemented in hardware, software, firmware or a combination thereof. When the function modules are implemented by hardware, the hardware may be for example, an electronic circuit, an Application Specific Integrated Circuit (ASIC), a proper firmware, plug-in, or function card and so on. When the function modules are implemented in software, elements of the invention are programs or code segments for implementing tasks. The programs or code segments may be stored in a machine-readable medium, or may be transmitted on a transmission media or a communication link via data signals carried in carriers. The "machine-readable medium" may include any medium capable of storing and transmitting information. Examples of the machine-readable medium includes the electronic circuit, a semiconductor storage, a ROM, a flash memory, a Erasable ROM (EROM), a floppy disk, a CD-ROM, an optical disk, a hard disk, an optical medium, a Radio Frequency (RF) link and so on. The code segments may be downloaded via a computer network such as Internet and Intranet.

The invention may be implemented in other specific ways without departing from the scope of the invention as defined by the claims. For example, algorithms described in specific embodiments may be modified while the system architecture does not depart from the scope of the invention. Therefore, present embodiments are considered as illustrative rather than limiting in all aspects.

**Claims**

1. A method for liquid detection, **characterized by** comprising:

    performing Computed Tomography (CT) scanning and X-Ray Diffraction (XRD) scanning on a liquid substance simultaneously to obtain CT data and XRD energy spectrum data of the liquid substance (S102);
    extracting a molecular interference function of the liquid substance based on the CT data and the XRD energy spectrum data (S104); and
    identifying the liquid substance by using the molecular interference function and the CT data (S106), wherein extracting the molecular interference function comprises:

    obtaining an equivalent atomic number of the liquid substance by reconstructing the CT data (S202);
    performing two-element or multi-element decomposition of the liquid substance by using the equivalent atomic number to obtain an equivalent molecular formula of the liquid substance (S204);
    estimating a coherent scattering formation factor and an incoherent scattering function of the liquid substance based on the equivalent molecular formula (S206); and
    extracting the molecular interference function by using the coherent scattering formation factor, the incoherent scattering function and the XRD energy spectrum data (S208).

2. The method for liquid detection of claim 1, **characterized in that** the coherent scattering formation factor and the incoherent scattering function are estimated by means of independent atomic modeling.

3. The method for liquid detection of claim 2, **characterized in that** the molecular interference function is extracted based on an XRD energy spectrum intensity formula.

4. The method for liquid detection of claim 3, **characterized in that** the processing of extracting the molecular interference function comprises:

    selecting an upper limit and a lower limit of a scattering vector corresponding to the XRD energy spectrum data based on an effective range of the XRD energy spectrum data;
    extracting the molecular interference function based on the XRD energy spectrum intensity formula by using the upper limit and the lower limit of the scattering vector.

5. The method for liquid detection of claim 2, **characterized in that** the molecular interference function is extracted based on a diffraction intensity formula.

6. The method for liquid detection of claim 5, **characterized in that** the molecular interference function is extracted based on an approximate equation of the diffraction intensity formula by using a total scattering cross section that is dependent on the incoherent scattering function and the coherent scattering formation factor.

7. The method for liquid detection of claim 1, **characterized in that** the XRD energy spectrum data is obtained by correcting XRD scattering energy spectrum data of the liquid substance by using XRD transmission energy spectrum data of the liquid substance.

8. A system for liquid detection, **characterized by** comprising:

   a data obtaining device configured to perform Computed Tomography (CT) scanning and X-Ray Diffraction (XRD) scanning on a liquid substance simultaneously to obtain CT data and XRD energy spectrum data of the liquid substance (S102);
   a function extracting unit configured to extract a molecular interference function of the liquid substance based on the CT data and the XRD energy spectrum data (S104); and
   a substance identifying unit configured to identify the liquid substance by using the molecular interference function and the CT data (S 106), wherein

   the function extracting unit is further configured to:

   obtain an equivalent atomic number of the liquid substance by reconstructing the CT data (S202);
   perform two-element or multi-element decomposition of the liquid substance by using the equivalent atomic number to obtain an equivalent molecular formula of the liquid substance (S204);
   estimate a coherent scattering formation factor and an incoherent scattering function of the liquid substance based on the equivalent molecular formula (S206); and
   extract the molecular interference function by using the coherent scattering formation factor, the incoherent scattering function and the XRD energy spectrum data (S208).

9. The system for liquid detection of claim 8, **characterized in that** the function extracting unit is configured to estimate the coherent scattering formation factor and the incoherent scattering function by means of independent atomic modeling.

10. The system for liquid detection of claim 9, **characterized in that** the function extracting unit is configured to extract the molecular interference function based on an XRD energy spectrum intensity formula.

11. The system for liquid detection of claim 10, **characterized in that** the function extracting unit is further configured to:

    select an upper limit and a lower limit of a scattering vector corresponding to the XRD energy spectrum data based on an effective range of the XRD energy spectrum data;
    extract the molecular interference function based on the XRD energy spectrum intensity formula by using the upper limit and the lower limit of the scattering vector.

12. The system for liquid detection of claim 9, **characterized in that** the function extracting unit is configured to extract the molecular interference function based on a diffraction intensity formula.

13. The system for liquid detection of claim 12, **characterized in that** the function extracting unit is configured to extract the molecular interference function based on an approximate equation of the diffraction intensity formula by using a total scattering cross section that is dependent on the incoherent scattering function and the coherent scattering formation factor.

14. The system for liquid detection of claim 8, **characterized in that** the XRD energy spectrum data is obtained by correcting XRD scattering energy spectrum data of the liquid substance by using XRD transmission energy spectrum data of the liquid substance.

**Patentansprüche**

1. Verfahren zur Flüssigkeitsdetektion, **dadurch gekennzeichnet, dass** es aufweist:

   gleichzeitiges Durchführen von CT-Scan und XRD-Scan an einer flüssigen Substanz, um CT-Daten und XRD-Energiespektrumdaten der flüssigen Substanz zu erhalten (S102);
   Extrahieren einer molekularen Interferenzfunktion der flüssigen Substanz basierend auf den CT-Daten und den XRD-Energiespektrumdaten (S 104); und
   Identifizieren der flüssigen Substanz unter Verwendung der molekularen Interferenzfunktion und der CT-Daten (S106), wobei

   Extrahieren der molekularen Interferenzfunktion umfasst:

   Erhalten einer äquivalenten Ordnungszahl der flüssigen Substanz durch Rekonstruierung der CT-Daten (S202);
   Durchführen einer Zweielement- oder Mehrelementzersetzung der flüssigen Substanz unter Verwendung der äquivalenten Ordnungszahl, um eine äquivalente Molekülformel der flüssigen Substanz zu erhalten (S204);
   Abschätzen eines Bildungsfaktors der kohärenten Streuung und einer inkohärenten Streufunktion der flüssigen Substanz basierend auf der äquivalenten Molekülformel (S206); und
   Extrahieren der molekularen Interferenzfunktion unter Verwenden des Bildungsfaktors der kohärenten Streuung, der inkohärenten Streufunktion und der XRD-Energiespektrendaten (S208).

2. Verfahren zur Flüssigkeitsdetektion nach Anspruch 1, **dadurch gekennzeichnet, dass** der Bildungsfaktor der kohärenten Streuung und die inkohärente Streufunktion mittels eines unabhängigen Atommodels abgeschätzt sind.

3. Verfahren zur Flüssigkeitsdetektion nach Anspruch 2, **dadurch gekennzeichnet, dass** die molekulare Interferenzfunktion basierend auf einer
   XRD-Energiespektrumsintensitätsformel extrahiert ist.

4. Verfahren zur Flüssigkeitsdetektion nach Anspruch 3, **dadurch gekennzeichnet, dass** die Verarbeitung zum Extrahieren der molekularen Interferenzfunktion umfasst:

   Auswählen einer oberen Grenze und einer unteren Grenze eines den XRD-Energiespektrumdaten entsprechenden Streuvektors basierend auf einem effektiven Bereich der XRD-Energiespektrumdaten;
   Extrahieren, unter Verwendung der oberen Grenze und der unteren Grenze des Streuvektors, der molekularen Interferenzfunktion basierend auf der XRD-Energiespektrumintensitätsformel.

5. Verfahren zur Flüssigkeitsdetektion nach Anspruch 2, **dadurch gekennzeichnet, dass** die molekulare Interferenzfunktion basierend auf einer Beugungsintensitätsformel extrahiert ist.

6. Verfahren zur Flüssigkeitsdetektion nach Anspruch 5, **dadurch gekennzeichnet, dass** die molekulare Interferenzfunktion basierend auf einer Näherungsgleichung der Beugungsintensitätsformel unter Verwendung eines gesamten Streuquerschnitts, der von der inkohärenten Streufunktion und dem Bildungsfaktor der kohärenten Streuung abhängt, extrahiert ist.

7. Verfahren zur Flüssigkeitsdetektion nach Anspruch 1, **dadurch gekennzeichnet, dass** die XRD-Energiespektrumdaten durch Korrigieren von XRD-Streuungs-Energiespektrumdaten der flüssigen Substanz unter Verwendung der XRD-Tansmissionsenergiespektrumdaten der flüssigen Substanz erhalten sind.

8. System zur Flüssigkeitsdetektion, **dadurch gekennzeichnet, dass** es aufweist:

   eine Datenerfassungsvorrichtung, die konfiguriert ist, CT-Scan und XRD-Scan an einer flüssigen Substanz gleichzeitig durchzuführen, um CT-Daten und XRD-Energiespektrumdaten der flüssigen Substanz zu erhalten (S102);
   eine Funktionsextrahiereinheit, die konfiguriert ist, eine molekulare Interferenzfunktion der flüssigen Substanz basierend auf den CT-Daten und den XRD-Energiespektrumdaten zu extrahieren (S104); und
   eine Substanzidentifikationseinheit, die konfiguriert ist, die flüssige Substanz unter Verwendung der molekularen Interferenzfunktion und der CT-Daten zu identifizieren (S106), wobei

die Funktionsextrahiereinheit ist ferner konfiguriert zum:

Erhalten einer äquivalenten Ordnungszahl der flüssigen Substanz durch Rekonstruierung der CT-Daten (S202); Durchführen einer Zweielement- oder Mehrelementzersetzung der flüssigen Substanz unter Verwendung der äquivalenten Ordnungszahl, um eine äquivalente Molekülformel der flüssigen Substanz zu erhalten (S204); Abschätzen eines Bildungsfaktors der kohärenten Streuung und einer inkohärenten Streufunktion der flüssigen Substanz basierend auf der äquivalenten Molekülformel (S206); und Extrahieren der molekularen Interferenzfunktion unter Verwenden des Bildungsfaktors der kohärenten Streuung, der inkohärenten Streufunktion und der XRD-Energiespektrendaten (S208).

9. System zur Flüssigkeitsdetektion nach Anspruch 8, **dadurch gekennzeichnet, dass** die Funktionsextrahiereinheit dazu konfiguriert ist, den Bildungsfaktor der kohärenten Streuung und die inkohärente Streufunktion mittels eines unabhängigen Atommodels abzuschätzen.

10. System zur Flüssigkeitsdetektion nach Anspruch 9, **dadurch gekennzeichnet, dass** die Funktionsextrahiereinheit dazu konfiguriert ist, die molekulare Interferenzfunktion basierend auf einer XRD-Energiespektrumsintensitätsformel zu extrahieren.

11. System zur Flüssigkeitsdetektion nach Anspruch 10, **dadurch gekennzeichnet, dass** die Funktionsextrahiereinheit ferner konfiguriert ist zum:

Auswählen einer oberen Grenze und einer unteren Grenze eines den XRD-Energiespektrumdaten entsprechenden Streuvektors basierend auf einem effektiven Bereich der XRD-Energiespektrumdaten; Extrahieren, unter Verwendung der oberen Grenze und der unteren Grenze des Streuvektors, der molekularen Interferenzfunktion basierend auf der XRD-Energiespektrumintensitätsformel.

12. System zur Flüssigkeitsdetektion nach Anspruch 9, **dadurch gekennzeichnet, dass** die Funktionsextrahiereinheit dazu konfiguriert ist, die molekulare Interferenzfunktion basierend auf einer Beugungsintensitätsformel zu extrahieren.

13. System zur Flüssigkeitsdetektion nach Anspruch 12, **dadurch gekennzeichnet, dass** die Funktionsextraktionseinheit dazu konfiguriert ist, die molekulare Interferenzfunktion basierend auf einer Näherungsgleichung der Beugungsintensitätsformel unter Verwendung eines gesamten Streuquerschnitts, der von der inkohärenten Streufunktion und dem Bildungsfaktor der kohärenten Streuung abhängt, zu extrahieren.

14. System zur Flüssigkeitsdetektion nach Anspruch 8, **dadurch gekennzeichnet, dass** die XRD-Energiespektrumdaten durch Korrigieren von XRD-Streuungs-Energiespektrumdaten der flüssigen Substanz unter Verwendung der XRD-Tansmissionsenergiespektrumdaten der flüssigen Substanz erhalten sind.

**Revendications**

1. Procédé de détection de liquide, **caractérisé en ce qu'**il comprend le fait :

d'effectuer un balayage de tomodensitométrie (CT) et un balayage par diffraction des rayons X (XRD) sur une substance liquide simultanément pour obtenir des données CT et des données de spectre d'énergie XRD de la substance liquide (S102) ; d'extraire une fonction d'interférence moléculaire de la substance liquide sur la base des données CT et des données de spectre d'énergie XRD (S104) ; et d'identifier la substance liquide en utilisant la fonction d'interférence moléculaire et les données CT (S106), où

l'extraction de la fonction d'interférence moléculaire comprend le fait :

d'obtenir un numéro atomique équivalent de la substance liquide en reconstruisant les données CT (S202) ; d'effectuer une décomposition en deux éléments ou en plusieurs éléments de la substance liquide en utilisant le numéro atomique équivalent pour obtenir une formule moléculaire équivalente de la substance liquide (S204) ; d'estimer un facteur de formation de diffusion cohérente et une fonction de diffusion incohérente de la substance liquide sur la base de la formule moléculaire équivalente (S206); et

d'extraire la fonction d'interférence moléculaire en utilisant le facteur de formation de diffusion cohérente, la fonction de diffusion incohérente et les données de spectre d'énergie XRD (S208).

2.  Procédé de détection de liquide de la revendication 1, **caractérisé en ce que** le facteur de formation de diffusion cohérente et la fonction de diffusion incohérente sont estimés au moyen d'une modélisation atomique indépendante.

3.  Procédé de détection de liquide de la revendication 2, **caractérisé en ce que** la fonction d'interférence moléculaire est extraite sur la base d'une formule d'intensité de spectre d'énergie XRD.

4.  Procédé de détection de liquide de la revendication 3, **caractérisé en ce que** le traitement d'extraction de la fonction d'interférence moléculaire comprend le fait :

    de sélectionner une limite supérieure et une limite inférieure d'un vecteur de diffusion correspondant aux données de spectre d'énergie XRD sur la base d'une plage efficace des données de spectre d'énergie XRD ;
    d'extraire la fonction d'interférence moléculaire sur la base de la formule d'intensité de spectre d'énergie XRD en utilisant la limite supérieure et la limite inférieure du vecteur de diffusion.

5.  Procédé de détection de liquide de la revendication 2, **caractérisé en ce que** la fonction d'interférence moléculaire est extraite sur la base d'une formule d'intensité de diffraction.

6.  Procédé de détection de liquide de la revendication 5, **caractérisé en ce que** la fonction d'interférence moléculaire est extraite sur la base d'une équation approximative de la formule d'intensité de diffraction en utilisant une section transversale de diffusion totale qui dépend de la fonction de diffusion incohérente et du facteur de formation de diffusion cohérente.

7.  Procédé de détection de liquide de la revendication 1, **caractérisé en ce que** les données de spectre d'énergie XRD sont obtenues en corrigeant les données de spectre d'énergie de diffusion XRD de la substance liquide en utilisant des données de spectre d'énergie de transmission XRD de la substance liquide.

8.  Système de détection de liquide, **caractérisé en ce qu'**il comprend :

    un dispositif d'obtention de données configuré pour effectuer un balayage de tomodensitométrie (CT) et un balayage par diffraction des rayons X (XRD) sur une substance liquide simultanément pour obtenir des données CT et des données de spectre d'énergie XRD de la substance liquide (S102) ;
    une unité d'extraction de fonction configurée pour extraire une fonction d'interférence moléculaire de la substance liquide sur la base des données CT et des données de spectre d'énergie XRD (S104) ; et
    une unité d'identification de substance configurée pour identifier la substance liquide en utilisant la fonction d'interférence moléculaire et les données CT (S106), où

    l'unité d'extraction de fonction est en outre configurée :

    pour obtenir un numéro atomique équivalent de la substance liquide en reconstruisant les données CT (S202) ;
    pour effectuer une décomposition en deux éléments ou en plusieurs éléments de la substance liquide en utilisant le numéro atomique équivalent pour obtenir une formule moléculaire équivalente de la substance liquide (S204) ;
    pour estimer un facteur de formation de diffusion cohérente et une fonction de diffusion incohérente de la substance liquide sur la base de la formule moléculaire équivalente (S206) ; et
    pour extraire la fonction d'interférence moléculaire en utilisant le facteur de formation de diffusion cohérente, la fonction de diffusion incohérente et les données de spectre d'énergie XRD (S208).

9.  Système de détection de liquide de la revendication 8, **caractérisé en ce que** l'unité d'extraction de fonction est configurée pour estimer le facteur de formation de diffusion cohérente et la fonction de diffusion incohérente au moyen d'une modélisation atomique indépendante.

10. Système de détection de liquide de la revendication 9, **caractérisé en ce que** l'unité d'extraction de fonction est configurée pour extraire la fonction d'interférence moléculaire sur la base d'une formule d'intensité de spectre d'énergie XRD.

11. Système de détection de liquide de la revendication 10, **caractérisé en ce que** l'unité d'extraction de fonction est outre configurée :

pour sélectionner une limite supérieure et une limite inférieure d'un vecteur de diffusion correspondant aux données de spectre d'énergie XRD sur la base d'une plage efficace des données de spectre d'énergie XRD ; pour extraire la fonction d'interférence moléculaire sur la base de la formule d'intensité de spectre d'énergie XRD en utilisant la limite supérieure et la limite inférieure du vecteur de diffusion.

**12.** Système de détection de liquide de la revendication 9, **caractérisé en ce que** l'unité d'extraction de fonction est configurée pour extraire la fonction d'interférence moléculaire sur la base d'une formule d'intensité de diffraction.

**13.** Système de détection de liquide de la revendication 12, **caractérisé en ce que** l'unité d'extraction de fonction est configurée pour extraire la fonction d'interférence moléculaire sur la base d'une équation approximative de la formule d'intensité de diffraction en utilisant une section transversale de diffusion totale qui dépend de la fonction de diffusion incohérente, et du facteur de formation de diffusion cohérente.

**14.** Système de détection de liquide de la revendication 8, **caractérisé en ce que** les données de spectre d'énergie XRD sont obtenues en corrigeant les données de spectre d'énergie de diffusion XRD de la substance liquide en utilisant des données de spectre d'énergie de transmission XRD de la substance liquide.

FIG. 1

Obtaining an equivalent atomic number
of a liquid substance

S202

Obtaining an equivalent molecular formula
of the liquid substance

S204

Estimating a coherent scattering formation factor and an
incoherent scattering function of the liquid substance

S206

Extracting the molecular interference
function of the liquid substance

S208

**FIG. 2**

**Water**

Normalized Intensity

**FIG. 3a**

**Ethanol**

Normalized Intensity

**FIG. 3b**

**Normalized Intensity**

**Water**

FIG. 4a

**Ethanol**

**Normalized Intensity**

FIG. 4b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 3023001 A1
- EP 2075570 A1
- US 7519154 B2
- US 8582718 B2